# EUROPÄISCHE PATENTSCHRIFT

(11) **EP 0 639 628 B1**
(45) Veröffentlichungstag und Bekanntmachung des Hinweises auf die Patenterteilung: **11.11.1998**
(21) Anmeldenummer: 94112378.8
(22) Anmeldetag: 08.08.1994
(51) Int. Cl.: C09D 175/12, C09D 175/04, C08G 18/32, C08G 18/38, C08G 18/63

(54) **Verfahren zur Herstellung von Überzügen**
Process for preparing coatings
Procédé de production de revêtements

(30) Priorität: 19.08.1993 DE 4327853
(43) Veröffentlichungstag der Anmeldung: 22.02.1995
(73) Patentinhaber: BAYER AG, 51368 Leverkusen (DE)
(72) Erfinder: Zwiener, Christian, Dr., D-50735 Köln (DE); Sonntag, Michael, Dr., D-51519 Odenthal (DE); Margotte, Dieter, Dr., D-47807 Krefeld (DE); Pedain, Josef, Dr., D-51061 Köln (DE); Blum, Harald, Dr., D-47669 Wachtendonk (DE); Schneider, Volker, Dr., D-47669 Wachtendonk (DE)

(56) Entgegenhaltungen:
- EP-A- 0 403 921
- EP-A- 0 531 249
- DE-A- 3 324 960
- US-A- 4 471 102

## Beschreibung

Die vorliegende Erfindung betrifft ein neues Verfahren zur Herstellung von Überzügen auf beliebigen Substraten unter Verwendung eines Beschichtungsmittels, welches als Bindemittel ein Zweikomponenten-System aus einer Polyisocyanatkomponente und einer speziellen, gegenüber Isocyanatgruppen reaktionsfähigen Reaktivkomponente enthält.

Zweikomponenten-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten, sind seit langem bekannt. Sie eignen sich zur Herstellung von hochwertigen Überzügen, die hart, elastisch, abrieb- und lösungsmittelbeständig und vor allem auch witterungsstabil eingestellt werden können.

Bei dem nachstehend näher beschriebenen erfindungsgemäßen Verfahren werden neuartige Zweikomponenten-Beschichtungsmittel eingesetzt, deren Bindemittel aus einen Zweikomponenten-System aus einer Polyisocyanatkomponente und einer gegenüber Isocyanatgruppen reraktionsfähigen Reaktivkomponente besteht, wobei diese Reaktivkomponente sich ganz oder teilweise aus einer Abmischung aus bestimmten, nachstehend näher beschriebenen sekundären Polyaminen und Oxazolidinen zusammensetzt.

Bei den sekundären Polyaminen handelt es sich um die sogenannten Polyasparaginsäureester wie sie in den EP-A-0 403 921 beschrieben werden. Diese Amine eignen sich in Kombination mit Lackpolyisocyanaten insbesondere als Bindemittel in lösungsmittelarmen oder -freien Beschichtungsmitteln und ermöglichen eine rasche Aushärtung der Beschichtungen bei niedrigen Temperaturen.

Die Verwendung von Oxazolidinen mit Polyisocyanaten als feuchtigkeitshärtende Reaktivsysteme für Beschichtungen, Klebstoffe und andere Anwendungen ist seit langem bekannt und wird z.B. in den US-Patentschriften 36 61 923, 37 43 626, 39 12 691, 40 24 117, 40 32 686, 41 01 527, 41 18 376, 41 38 545 und 44 71 102 ausführlich beschrieben.

In der EP-A-0 531 249 werden neue, bei Umgebungstemperatur trocknende Beschichtungsmittel beschrieben. Es handelt sich hierbei um Kombinationen von hydroxyfunktionellen Harzen mit Isocyanaten und Aldiminen bzw. Ketiminen, wobei diesen Gemischen Reaktivverdünner aus entweder sekundären Aminen, Alkoholen oder Oxazolidinen zugesetzt werden können.

Es ist jedoch bekannt, daß Lackformulierungen, die Ketimine bzw. Aldimine enthalten, sowohl im Flüssiglack als auch in ausgehärteter Form stark vergilben und somit für Decklacke höchster Qualität weniger geeignet sind. Dies gilt auch für Lackformulierungen, die Ketimine bzw. Aldimine und Polyasparaginsäureester enthalten.

Obwohl Beschichtungssysteme mit Oxazolidinen ähnliche Vergildungserscheinungen zeigen, wurde nun überraschenderweise gefunden, daß sich - schon nach Trocknung bei niedrigen Temperaturen - Überzüge mit ganz hervorragenden Eigenschaften, vor allem geringerer Vergilbungsneigung und sehr guter Beständigkeit gegen Lösungsmittel, erhalten lassen, wenn zur Herstellung dieser Überzüge Zweikomponenten-Beschichtungsmittel eingesetzt werden, deren Bindemittel aus einer Polyisocyanatkomponente und einer gegenüber Isocyanatgruppen reaktionsfähigen Reaktivkomponente besteht, die sich ganz oder teilweise aus einer Abmischung aus Polyasparaginsäureestern und Oxazolidinen zusammensetzt.

Gegenstand der Erfindung ist ein Verfahren zur Herstellung von Überzügen durch Beschichtung beliebiger Substrate mit einem Beschichtungsmittel, welches als Bindemittel an Zweikomponenten-System aus
a) einer Polyisocyanatkomponente wobei aromatische Polyisocyanate ausgenommen sind und
b) einer gegenüber Polyisocyanaten reaktionsfähigen Reaktivkomponente,
sowie gegebenenfalls die aus der Beschichtungstechnologie bekannten Hilfs- und Zusatzmittel enthält, dadurch gekennzeichnet, daß die Bindemittelkomponente b) aus Gemischen aus
b1) Verbindungen der allgemeinen Formel (I) 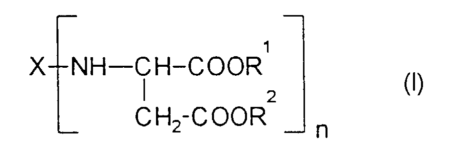
b2) Verbindungen des Molekulargewichtsbereichs Mn von 73 bis 10.000, die pro Molekül mindestens eine Struktureinheit der Formel (II) 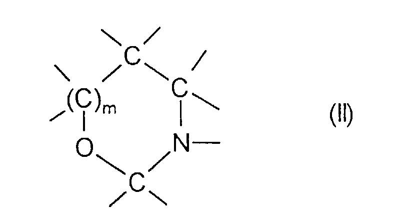 und gegebenenfalls
b3) anderen aus der Polyurethanchemie an sich bekannten, gegenüber Isocyanatgruppen reaktionsfähige Gruppen aufweisenden Verbindungen besteht,
   wobei in diesen Formeln
   - X: für einen n-wertigen, gegenüber Isocyanatgruppen inerten Rest steht, wie er durch Entfernung der primären Aminogruppen aus einem entsprechenden, (cyclo)aliphatisch gebundene Aminogruppen aufweisenden Polyamin des Molekulargewichtsbereichs 60 bis 6000, vorzugsweise 88 bis 322 erhalten wird,
   - R¹ und R²: für gleiche oder verschiedene Alkylreste mit 1 bis 18, vorzugsweise 1 bis 8, insbesondere 1 bis 4 Kohlenstoffatomen stehen,
   - n: für eine ganze Zahl von mindestens 2 steht, und
   - m: für 0 oder 1 steht,
   wobei Aldimine und Ketimine ausgenommen sind.
Für das erfindungsgemäße Verfahren kommen als Polyisocyanatkomponente a) im Prinzip alle aus der Polyurethanchemie bekannten Polyisocyanate in Betracht. Beispielsweise gut geeignet sind niedermolekulare Polyisocyanate des Molekulargewichtsbereichs 168 bis 300 wie beispielsweise Hexamethylendiisocyanat, 2,2,4-und/oder 2,4,4-Trimethyl-hexamethylendiisocyanat, Dodecamethylendiisocyanat, 1,4-Diisocyanatocyclohexan, 1-Isocyanato-3,3,5-trimethyl-5-isocyanatomethyl-cyclohexan (IPDI), 2,4'- und/oder 4,4'-Diisocyanato-dicyclohexylmethan, oder Gemische dieser Isomeren mit ihren höheren Homologen, wie sie in an sich bekannter Weise durch Phosgenierung von Anilin/Formaldehyd-Kondensaten zugänglich sind, oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören beispielsweise Biuretgruppen aufweisende Polyisocyanate, wie sie beispielsweise in US-PS 31 24 605, US-PS 32 01 372 oder DE-OS 11 01 394 beschrieben sind, Isocyanuratgruppen aufweisende Polyisocyanate, wie sie z.B. in der US-PS 30 01 973, in den DE-PS 10 22 789, 12 22 067 und 10 27 394 sowie in den DE-OS 19 29 034 und 20 04 048 beschrieben werden, Urethangruppen aufweisende Polyisocyanate, wie sie z.B. in der DE-OS 953 012, der BE-PS 752 261 oder in den US-PS 33 94 164 und 36 44 457 beschrieben werden, Carbodiimidgruppen aufweisende Polyisocyanate, wie sie in der DE-PS 10 92 007, in der US-PS 31 52 162 sowie in den DE-OS 25 04 400, 25 37 685 und 25 52 350 beschrieben werden, Allophanatgruppen aufweisende Polyisocyanate, wie sie z.B. in der GB-PS 994 890, in der BE-PS 761 626 und in der NL-OS 71 02 524 beschrieben werden und Uretdiongruppen aufweisende Polyisocyanate, wie sie in der EP-A 0 377 177 beschrieben werden, wobei hier genannte aromatische Polyisocyanate ausgenommen sind.

Zu den besonders bevorzugten modifizierten Polyisocyanaten gehören das N,N',N"-Tris-(6-isocyanatohexyl)-biuret und seine Gemische mit seinen höheren Homologen sowie das N,N',N"-Tris-(6-isocyanatohexyl)-isocyanurat bzw. dessen Gemische mit seinen höheren, mehr als einen Isocyanuratring aufweisenden Homologen.

Weiterhin bevorzugt werden als Polyisocyanatkomponente a) Isocyanatgruppen aufweisende Prepolymere bzw. Semiprepolymere auf Basis der beispielhaft genannten einfachen oder modifizierten Polyisocyanate einerseits und organischen Polyhydroxylverbindungen andererseits eingesetzt. Diese Prepolymeren bzw. Semiprepolymeren weisen im allgemeinen einen NCO-Gehalt von 0,5 bis 30, vorzugsweise 1 bis 20 Gew.-% auf und werden in an sich bekannter Weise durch Umsetzung der genannten Ausgangsmaterialien unter Einhaltung eines NCO/OH-Äquivalentverhältnisses von 1,05:1 bis 10:1, vorzugsweise 1,1:1 bis 3:1 hergestellt, wobei sich im Anschluß an die Umsetzung gegebenenfalls eine destillative Entfernung von gegebenenfalls noch vorliegenden freiem flüchtigem Ausgangspolyisocyanat anschließt.

Zur Herstellung derartiger Prepolymerer bzw. Semiprepolymerer eignen sich niedermolekulare Polyhydroxylverbindungen des Molekulargewichtsbereichs 62 bis 299 wie beispielsweise Ethylenglykol, Propylenglykol, Trimethylolpropan, 1,6-Dihydroxyhexan, niedermolekulare, Hydroxylgruppen aufweisende Ester derartiger Polyole mit Dicarbonsäuren der nachstehend beispielhaft genannten Art oder niedermolekulare Ethoxylierungs- und/oder Propoxylierungsprodukte derartiger einfacher Polyole oder beliebige Gemische derartiger mehrwertiger modifizierter oder nicht modifizierter Alkohole.

Vorzugsweise werden jedoch zur Herstellung der Prepolymeren bzw. Semiprepolymeren höhermolekulare Polyhydroxylverbindungen des aus OH-Gehalt und -Funktionalität berechenbaren Molekulargewichts 300 bis 8.000, vorzugsweise 1.000 bis 5.000, der aus der Polyurethanchemie an sich bekannten Art eingesetzt. Diese Polyhydroxylverbindungen tragen pro Molekül mindestens zwei Hydroxylgruppen und weisen im allgemeinen einen Hydroxylgruppengehalt von 0,5 bis 17, vorzugsweise 1 bis 5 Gew.-% auf.

Höhermolekülare Polyhydroxylverbindungen zur Herstellung der Prepolymeren bzw. Semiprepolymeren sind beispielsweise die den gemachten Angaben entsprechende Polyester-Polyole auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Säureanhydride. Auch den obigen Angaben entsprechende, Hydroxylgruppen aufweisende Polylactone, insbesondere Poly-ε-caprolactone sind zur Herstellung der Prepolymeren bzw. Semiprepolymeren geeignet.

Zur Herstellung der Isocyanatgruppen aufweisenden Prepolymeren bzw. Semiprepolymeren ebenfalls gut geeignet sind die, obigen Ausführungen entsprechenden, Polyether-Polyole, wie sie in an sich bekannter Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei den Alkoxylierungsreaktion eingesetzt werden können.

Zur Herstellung der Prepolymeren bzw. Semiprepolymeren ferner geeignet sind die, obigen Ausführungen entsprechenden, Hydroxylgruppen aufweisenden Polycarbonate, wie sie beispielsweise durch Umsetzung von einfachen Diolen der oben bereits beispielhaft genannten Art mit Diarylcarbonaten, beispielsweise Diphenylcarbonaten, oder Phosgen hergestellt werden können.

Bei der Komponente b1) handelt es sich um Verbindungen der Formel (I) 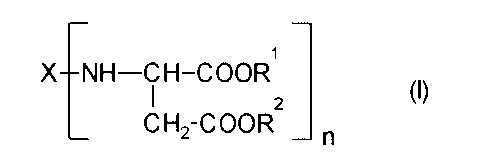 für welche X, R¹, R² und n die bereits vorstehend genannte Bedeutung haben.

Besonders bevorzugt werden solche Verbindungen der Formel (I) (nachstehend auch als Polyasparaginsäureester bezeichnet) verwendet, für welche n für 2 steht. Besonders bevorzugt sind jene, für welche X für einen zweiwertigen Kohlenwasserstoffrest steht, wie er durch Entfernung der Aminogruppen aus 1-Amino-3,3,5-trimethyl-5-aminomethyl-cyclohexan, 4,4'-Diaminodicyclohexylmethan, 3,3'-Dimethyl-4,4'-diamino-dicyclohexylmethan, Hexahyro-2,4- und/oder 2,6-diaminotoluol, den isomeren C-Monomethyl-diaminodicyclohexylmethanen oder aus 3(4)-Aminomethyl-1-methylcyclohexylamin erhalten wird.

Zu den bevorzugten Ausgangskomponenten b1) gehören im übrigen solche der genannten allgemeinen Formel (I), für welche R¹ und R² für eine Methyl-, Ethyl-, n-Butyl- oder 2-Ethylhexylgruppe stehen.

Die Herstellung der Ausgangsverbindungen b1) erfolgt in an sich bekannter Weise durch Umsetzung der entsprechenden primären Polyamine der Formel

X(-NH₂)ₙ

mit Malein- oder Fumarsäureestern der allgemeinen Formel

R¹OOC-CH=CH-COOR²

Geeignete Polyamine sind beispielsweise Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-dimainohexan, 1,11-Diaminoundecan, 1,12-Diaminododecan, 1-Amino-3,3,5-trimethyl-5-aminomethylcyclohexan, 2,4- und/oder 2,6-Hexahydrotoluylendiamin, andere alkylsubstituierte Cyclohexandiamine, wie z.B. Isopropyl-2,4- und/oder 2,6-diaminocyclohexan, 2,4'- und/oder 4,4'-Diamino-dicyclohexylmethan, 3,3'-Dimethyl-4,4'-diaminodicyclohexylmethan, die isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin oder auch, weniger bevorzugt, höhermolekulare Polyetherpolyamine mit aliphatisch gebundenen primären Aminogruppen wie sie beispielsweise unter der Bezeichnung ®Jeffamin von der Firma Texaco vertrieben werden.

Zur Herstellung der Ausgangskomponenten b1) geeignete Malein- oder Fumarsäurester sind beispielsweise Maleinsäure-dimethylester, -diethylester, di-n- oder -isopropylester, -di-n-butylester, -di-2-ethylhexylester oder die entsprechenden Fumarsäureester.

Die Herstellung der "Polyasparaginsäureester" b1) aus den genannten Ausgangsmaterialien erfolgt beispielsweise innerhalb des Temperaturbereichs von 0 bis 100°C unter Verwendung von solchen Mengenverhältnissen, daß auf jede primäre Aminogruppe mindestens eine und vorzugsweise eine olefinische Doppelbindung entfällt, wobei im Anschluß an die Umsetzung, gegebenenfalls im Überschuß eingesetzte Ausgangsmaterialien destillativ abgetrennt werden können. Die Umsetzung kann in Substanz oder auch in Gegenwart von geeigneten Lösungsmitteln wie beispielsweise Methanol, Ethanol, Propanol, Ethyl- oder Butyacetat oder Gemischen derartiger Lösungsmittel erfolgen.

Bei der Komponente b2) handelt es sich um Verbindungen, die pro Molekül mindestens eine Struktureinheit der allgemeinen Formel (II) 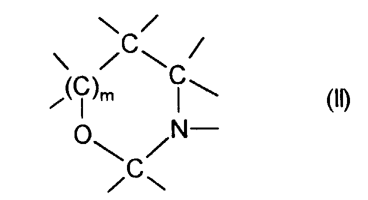 aufweisen. Diese Verbindungen werden im Rahmen der Erfindung auch als "Oxazolidine" bezeichnet. Dieser Begriff umfaßt somit nicht nur die entsprechenden 5-gliedrigen Heterocyclen (m = 0), sondern auch die diesen klassischen Oxazolidinen entsprechenden 6-gliedrigen Verbindungen. Die erfindungsgemäß als Komponente b2) in Betracht kommenden "Oxazolidine" weisen ein Molekülargewicht Mn (Zahlenmittel) von 73 bis 10.000, vorzugsweise 73 bis 3.000 und insbesondere 73 bis 1.500 auf. Das Molekulargewicht kann, falls es sich nicht als Summe der Atomgewichte der einzelnen Elemente ohnehin leicht ermitteln läßt, beispielsweise aus der Funktionalität und dem Gehalt an funktionellen Gruppen (beispielsweise ermittelbar durch Bestimmung der nach Hydrolyse vorliegenden primären Aminogruppen) errechnet oder auch, bei höhermolekularen Verbindungen, gelpermeationschromatographisch unter Verwendung von Polystyrol als Standard ermittelt werden.

Zu den bevorzugten Oxazolidinen b2) gehören solche Verbindungen der genannten Art, die pro Molekül 1 bis 4 und insbesondere 2 bis 3 Struktureinheiten der Formel (III) 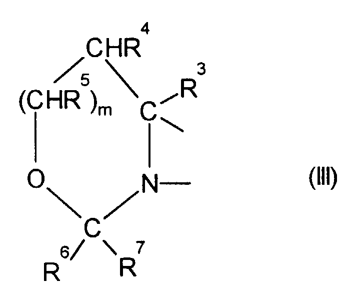 aufweisen, wobei
- R³: für Wasserstoff oder einen Alkylrest mit 1 bis 6 Kohlenstoffatomen steht,
- R⁴ und R⁵: für gleiche oder verschiedene Reste stehen und Wasserstoff oder Alkylreste mit 1 bis 3 Kohlenstoffatomen bedeuten,
- R⁶ und R⁷: für gleiche oder verschiedene Reste stehen und für Wasserstoff oder inerte organische Reste wie z.B. Kohlenwasserstoffreste mit bis zu 8 Kohlenstoffatomen, insbesondere Alkylreste mit 1 bis 8 Kohlenstoffatomen stehen, wobei die Reste R⁶ und R⁷ auch zusammen mit den Kohlenstoffatomen des heterocyclischen Rings zu einem 5- oder 6-gliedrigen cycloaliphatischen Ring verknüpft sein können, mit der Maßgabe, daß höchstens einer der Reste R⁶ und R⁷ für Wasserstoff steht, und
- m: für 0 oder 1 steht.

Besonders bevorzugte, als Komponente b2) geeignete Oxazlidine sind solche, die pro Molekül 2 oder 3, insbesondere 2 Struktureinheiten der Formel (IV) 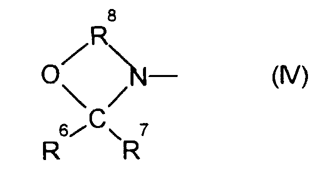 aufweisen, wobei R⁶ und R⁷ die bereits obengenannte Bedeutung haben und
- R⁸: für einen Alkylenrest mit 2 bis 6, insbesondere 2 bis 3 Kohlenstoffatomen steht, mit der Maßgabe, daß zwischen dem Sauerstoff- und dem Stickstoffatom 2 oder 3 Kohlenstoffatomen angeordnet sind.

Zu den erfindungsgemäß geeigneten "Oxazolidinen" b2) gehören beispielsweise die Struktureinheiten der Formel (II) aufweisenden, bicyclischen Verbindungen gemäß US-A-4 707 532, die Struktureinheiten der Formel (II) aufweisenden, bicyclischen Verbindungen gemäß US-A 5 089 565, die Struktureinheiten der Formel (II) aufweisenden, bicyclischen Verbindungen gemäß US-A-4 101 527 und insbesondere die oben zuletzt gemachten Ausführungen entsprechenden als "Oxazolane" bezeichneten Verbindungen gemäß US-A-4 975 493.

Zu den bevorzugten letztgenannten Verbindungen gehören insbesondere jene des Molekülargewichtsbereichs Mn 73 bis 1.500, die pro Molekül 2 oder 3 Struktureinheiten der oben genannten Formel (IV) aufweisen, wobei
- R⁶ und R⁷: für gleiche oder verschiedene Reste stehen und Wasserstoff oder Alkylgruppen mit 1 bis 4 Kohlenstoffatomen bedeuten, wobei die beiden Reste zusammen mit dem Kohlenstoffatom des heterocyclischen Rings auch zu einem Cyclohexanring verknüpft sein können, mit der Maßgabe, daß höchstens einer der Reste R⁶ und R⁷ für Wasserstoff steht.

Besonders bevorzugt kommen als Komponente b2) Oxazolidine der allgemeinen Formel (V) 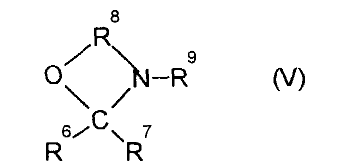 in Betracht, in welcher R⁶, R⁷ und R⁸ die soeben genannte Bedeutung haben, und R⁹ für Wasserstoff, für einen aliphatischen Kohlenwasserstoffrest mit 1 bis 12, vorzugsweise 1 bis 4 Kohlenstoffatomen, für einen cycloaliphatischen Kohlenwasserstoffrest mit 5 bis 10 Kohlenstoffatomen, für einen araliphatischen Kohlenwasserstoffrest mit 6 bis 12 Kohlenstoffatomen steht, der gegebenenfalls auch gegenüber Isocyanatgruppen reaktionsfähige funktionelle Gruppen, wie z.B. Hydroxylgruppen, aufweisen kann.

Im übrigen ist die Natur des Restes R⁹ bezüglich der Eignung der Verbindungen als Komponente b2) ohne Bedeutung. Falls es sich bei den Substituenten R⁹ um Wasserstoff oder um Kohlenwasserstoffreste mit gegenüber Isocyanatgruppen reaktionsfähigen Gruppen, insbesondere Hydroxyl- oder Aminogruppen handelt, findet bei Kontakt der Polyisocyanatkomponente a) mit den Oxazlodinen b2) eine spontan ablaufende Additionsreaktion zwischen den Isocyanatgruppen einerseits und den gegenüber den Isocyanatgruppen reaktionsfähigen Gruppen andererseits statt, so daß als Zwischenprodukte ganz oder teilweise Umsetzungsprodukte aus a) und b2) entstehen.

Erfindungsgemäß als Komponente b2) geeignete Oxazolidine, die mehr als einen Oxazolidinring der vorstehend genannten allgemeinen Formel (II) bis (IV) enthalten, können beispielsweise aus Monooxazolidinen der zuletztgenannten allgemeinen Formel (V) mit R⁹ = H, oder die im Rest R⁹ reaktionsfähige Gruppen aufweisen, durch an sich bekannte Modifizierungsreaktionen erhalten werden.

Die Herstellung der Monooxazolidine der zuletztgenannten allgemeinen Formel gelingt in an sich bekannter Weise durch Umsetzung von entsprechenden Aldehyden bzw. Ketonen der Formel 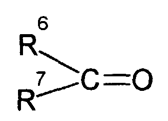 die vorzugsweise ein Molekulargewicht von 58 bis 198 (Ketone) bzw. von 30 bis 128 (Aldehyde) aufweisen, mit geeignenten Hydroxyaminen der nachstehend näher genannten Art.

Geeignete Aldehyde sind beispielsweise Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal, Sorbinaldehyd.

Besonders bevorzugt sind dabei Butyraldehyd, Isobutyraldehyd, Trimethylacetaldehyd, 2,2-Dimethylpropanal, 2-Ethylhexanal und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-n-amylketon, Methylisoamylketon, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, Methyl-tert.-butylketon, 5-Methyl-3-heptanon, 4-Heptylketon, 1-Phenyl-2-propanon, Acetophenon, Methylnonylketon, Dinoylketon, 3,3,5-Trimethylcyclohexanon.

Besonders geeignete Ketone sind:
Cyclopentanon, Cyclohexanon, Methylcyclopentanon, Methylcyclohexanon, 3,3,5-Trikmethylcyclohexanon, Cyclobutanon, Methylcyclobutanon, Aceton, Methylethylketon, Methylisobutylketon.

Es können selbstverständlich auch Mischungen verschiedener Ketone bzw. Aldehyde und auch Mischungen von Ketonen mit Aldehyden eingesetzt werden um spezielle Eigenschaften zu erzielen.

Bei den zur Herstellung der Oxazolidine der Formel (V) zum Einsatz gelangenden Hydroxyaminen handelt es sich insbesondere um organische Verbindungen, die mindestens eine aliphatisch gebundene Aminogruppe und mindestens eine aliphatische gebundene Hydroxylgruppe aufweisen. Die Hydroxyamine entsprechen vorzugsweise der Formel (VI)

HO-R⁸-NHR⁹ (VI).

Konkrete Beispiele für geeignete Hydroxyamine sind Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-methyl-1-propanol, 2-Amino-ethyl-propanol, 2-Amino-2-propyl-1-propanol, 2-Amino-2-methyl-1,3-propanol, 2-Amino-3-methyl-3-hydroxybutan, Aminoethanol oder die isomeren Aminopropanole, wie sie beispielsweise bei der Umsetzung von Ammoniak mit Propylenoxid erhalten werden. Besonders bevorzugt sind Bis(2-hydroxyethyl)-amin, Bis-(2-hydroxypropyl)-amin, Bis-(2-hydroxybutyl)-amin, Bis-(3-hydroxyhexyl)-amin, 2-(Methylamino)-ethanol, 2-(Ethylamino)-ethanol, 2-Amino-2-methyl-1-propanol und 2-Amino-2-ethyl-1-propanol.

Die Herstellung der Oxazolidine der Formel V erfolgt durch Umsetzung der Ausgangskomponenten, wobei im allgemeinen die Mengenverhältnisse der Reaktions partner so gewählt werden, daß die Hydroxyamine, bezogen auf die Carbonylgruppen der Aldehyde bzw. Ketone, bezüglich der Oxazolidinbildung in 1 bis 1,5fach äquivalenten Mengen vorliegen. Gegebenenfalls können zur Reaktionsbeschleunigung katalytische Mengen von sauren Substanzen wie beispielsweise p-Toluolsulfonsäure, Chlorwasserstoff, Schwefelsäure oder Aluminiumchlorid mitverwendet werden.

Die Umsetzung erfolgt im allgemeinen innerhalb des Temperaturbereichs von 60 bis 180°C, wobei die Reaktion gegebenenfalls in Gegenwart eines Schleppmittels zur Entfernung des Reaktionswassers so lange durchgeführt wird, bis die berechnete Menge an Wasser abgespalten ist bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z.B. Toluol, Xylol, Cyclohexan, Octan. Die so erhaltenen Rohprodukte können ohne weitere Reinigungsschritte als Komponente b2) beim erfindungsgemäßen Verfahren zur Herstellung der Bindemittelkombination verwendet werden.

Zur Herstellung von höherfunktionellen Oxazolidinen kann beispielsweise so vorgegangen werden, daß man Monooxazolidine der obengenannten allgemeinen Formel (V), bei welchen R⁹ für Wasserstoff steht, oder welche im Rest R⁹ reaktionsfähige Gruppen (insbesondere Hydroxyl-, primäre oder sekundäre Aminogruppen) aufweisen mit mindestens difunktionellen Reaktionspartnern modifiziert. Zur Modifizierung geeignete Reaktionspartner sind beispielsweise Polyisocyanate, Polyepoxide, Polycarbonsäuren, einfache Polycarbonsäureester oder Polycarbonsäureanhydride und Carbonate.

Die Modifizierung mit organischen Polyisocyanaten kann gemäß der Lehre der DE-OS 24 46 438 erfolgen. Geeignete Polyisocyanate sind die in dieser Vorveröffentlichung beispielhaft genannten Verbindungen. Besonders bevorzugt werden niedermolekulare (cyclo)aliphatische Diisocyanate wie Hexamethylendiisocyanat, Isophorondiisocyanat oder 4,4'-Diisocyanato-dicyclohexylmethan bzw. höhermolekulare NCO-Prepolymere auf Basis derartiger Diisocyanate eingesetzt.

Zur Modifizierung der monofunktionellen Oxazolidine geeignete Polylepoxide sind beliebige organische Verbindungen, die mindestens zwei Epoxidgruppen im Molekül aufweisen. Vorzugsweise werden aliphatische Bisepoxide mit Epoxidäquivalentgewichten von 43 bis 300, wie z.B 1,3-Butadienbisepoxid, 1,5-Hexadienbisepoxid, Ethylenglykoldiglycidylether, Glycerin-1,3-diglycidylether, 3,4-Epoxycyclohexylmethyl-3',4'-epoxycyclohexan-carboxylatl (Diepoxid 126) Degussa AG), Adipinsäure-(3,4-epoxycyclohexyl)-bisester verwendet.

Die Modifizierungsreaktion zwischen den Monooxazolidinen und den Polyepoxiden erfolgt im allgemeinen innerhalb des Temperaturbereichs von 70 bis 140°C, gegebenenenfalls unter Mitverwendung eines geeigneten Lösungsmittels wie z.B. Toluol oder Cyclohexan.

Die Herstellung von höherfunktionellen Oxazolidinen kann auch durch Umsetzung von reaktionsfähigen Monooxazolidinen der genannten Art mit Polycarbonsäuren, deren niederen Alkylestern bzw. Polycarbonsäureanhydriden im Sinne einer Veresterungsreaktion (Hydroxylgruppen im Rest R⁹), wie sie beispielsweise in den DE-OS 19 52 091 und DE-OS 19 52 092 beschrieben ist, erfolgen.

Die Herstellung Carbonatgruppen aufweisender höherfunktioneller Oxazolidine erfolgt z.b. gemäß EP-A-0 499 188 durch Umsetzung geeigneter hydroxyfunktioneller Oxazolidine (z.B. Hydroxylgruppen im Rest R⁹) mit Carbonaten, wie z.B. Dimethyl-, Diethyl-, Dialkyl- oder Diphenylcarbonat oder auch cyclischer Carbonate, wie z.B. Propylencarbonat.

Die zur Herstellung der höherfunktioneller Oxazolidine eingesetzten Monooxazolidine mit reaktionsfähigen Gruppen können durch Verwendung von Hydroxyaminen der oben beispielhaft genannten Art erhalten werden, welche neben den zur Oxazolidinbildung erforderlichen Hydroxy- und Aminogruppen weitere Hydroxyl- oder Aminogruppen aufweisen, die an der Oxazolidinbildung nicht beteiligt sind. Auf diese Weise werden Monooxazolidine der obengenannten allgemeinen Formel (V) erhalten, in denen der Rest R⁹ Hydroxyl- oder reaktionsfähige Aminogruppen aufweist. Für die genannten Modifizierungsreaktionen zur Herstellung von höherfunktionellen Oxazolidinen können jedoch auch solche Monooxazolidine der genannten allgemeinen Formel (V) verwendet werden, für welche der Rest R⁹ für Wasserstoff steht, d.h. die unter Verwendung von einfachen Aminoalkoholen der beispielhaft genannten Art mit einer Hydroxyl- und einer primären Aminogruppen erhalten worden sind. Die Reaktionsfähigkeit derartiger sekundärer Aminogruppen, die Teil des heterocyclischen Rings sind, ist der Reaktionsfähigkeit von primären bzw. sekundären Aminogruppen, die Substituenten des Rests R⁹ darstellen, in erster Näherung gleichzusetzen.

Das Molekülargewicht und die Funktionalität der höherfunktionellen Oxazolidine kann auf einfache Weise durch geeignete Wahl der zur Modifizierung der Monooxazolidine eingesetzten Reaktionspartner eingestellt werden.

Gut als erfindungsgemäße Komponente b2) geeignet sind auch bicyclische Oxazolidine, die sich von der obengenannten Formel (III) dadurch ableiten, daß die freien Valenzen und das mit ihnen verknüpfte Kohlenstoff- bzw. Stickstoffatomen Teil eines ankondensierten symmetrischen Oxazolidinrings sind. Derartige bicyclische Oxazolidine, für welche die Reste R³ bis R⁷ und m die bereits obengenannte Bedeutung haben, werden analog zur Herstellung der monocyclischen Oxazolidine durch Umsetzung von entsprechenden Aldehyden bzw. Ketonen der bereits oben beispielhaft genannten Art mit geeigneten Dihydroxyaminen wie beispielsweise 2-Ainino-2-methyl-1,3-propandiol oder 2-Amino-2-hydroxymethyl-1,3-propandiol hergestellt. Bezüglich weiterer diesbezüglicher Einzelheiten sei auf die US-A-4 101 527 verwiesen.

Ebenfalls als Komponente b2) geeignet, jedoch weniger bevorzugt sind die bereits oben erwähnten bicyclischen Verbindungen gemäß US-A-4 707 532, 5 089 565 oder EP-A-0 346 669.

Bei den gegebenenfalls mitverwendeten Verbindungen b3) mit gegenüber Isocyanatgruppen reaktionsfähigen Gruppen handelt es sich vorzugsweise um organische Polyhydroxylverbindungen der aus der Polylurethanchemie an sich bekannten Art und zwar sowohl niedermolekulare als auch höhermolekulare Polyhydroxylverbindungen der bereits oben in Zusammenhang mit der Herstellung der Prepolymeren bzw. Semiprepolymeren beispielhaft genannten Art sowie um Aldeydharze.

Besonders bevorzugt werden als Komponente b3) hydroxyfunktionelle Polyacrylate der aus der Polyurethantechnologie an sich bekannten Art eingeetzt. Es handelt sich hierbei um Hydroxylgruppen aufweisende Copolymerisate olefinisch ungesättigter Verbindungen eines dampfdruck- bzw. membranosmometrisch bestimmten Molekulargewichts Mn von 800 bis 50.000, vorzugsweise 1.000 bis 20.000 und insbesondere 5.000 bis 10.000 mit einem Hydroxylgruppengehalt von 0,1 bis 12, vorzugsweise 1 bis 10 und insbesondere 2 bis 6 Gew.-%. Es handelt sich bei diesen Verbindungen um Copolymerisate von Hydroxylgruppen aufweisenden olefinischen Monomeren mit Hydroxylgruppen-freien olefinischen Monomeren. Beispiele für geeignete Monomere sind Vinyl- bzw. Vinylidenmonomere wie z.B. Styrol, α-Methylstyrol, o- bzw. p-Chlorstyrol, o-, m- oder p-Methylstyrol, p-tert.-Butylstyrol, Acrylsäure, (Meth)Acrylnitril, Acryl- und Methacrylsäureester mit 1 bis 8 Kohlenstoffatomen in der Alkoholkomponente wie beispielsweise Ethylacrylat, Methylacrylat, n- bzw. Isopropylacrylat, n-Butylacrylat, 2-Ethylhexylacrylat, 2-Ethylhexylmethacryl at, Isooctylacrylat, Methylmethacrylat, Ethylmethacrylat, Butylmethacrylat, Isooctylmethacrylat; Diester der Fumarsäure, Itaconsäure, Maleinsäure mit 4 bis 8 Kohlenstoffatomen in der Alkoholkomponente (Meth)-Acrylsäureamid, Vinylester von Alkanmonocarbonsäuren mit 2 bis 5 Kohlenstoffatomen wie Vinylacetat oder Vinylpropionat und Hydroxyalkylester der Acrylsäure oder Methacrylsäure mit 2 bis 4 Kohlenstoffatomen im Hydroxyalkylrest wie z.B. 2-Hydroxyethyl-, 2-Hydroxypropyl-, 4-Hydroxybutyl-, Trimethylolpropanmono- oder Pentaerythrit-mono-acrylat oder -methacrylat. Beliebige Gemische der beispielhaft genannten Monomeren können bei der Herstellung der hydroxyfunktionellen Polyacrylate selbstverständlich auch eingesetzt werden.

Im übrigen können als Komponente b3) beliebige Gemische der beispielhaft genannten Polyhydroxylverbindungen verwendet werden.

In den erfindungsgemäß eingesetzten Bindemitteln werden im übrigen die Mengenverhältnisse der Komponenten a), b1), b2) und b3) so bemessen, daß das Äquivalentverhältnis von Isocyanatgruppen zu gegenüber Isocyanatgruppen reaktionsfähigen bzw. potentiell reaktionsfähigen Gruppen bei 0,8:1 bis 2:1, vorzugsweise bei 0,8:1 bis 1,2:1 liegt. Bei der Berechnung der Äquivalentverhältnisse gehen die Oxazolidinringe der monocyclischen Mono- bzw. Polyoxazolidine als im Sinne der Isocyanat-Additionsreaktion potentiell difunktionelle Einheiten und die bicyclischen Systeme als potentiell trifunktionelle Einheiten in die Berechnung ein.

Die Menge der Komponenten b1) liegt bei 1 bis 99 Gew.-%, vorzugsweise bei 10 bis 75 Gew.-% und insbesondere bei 20 bis 60 Gew.-%.

Die Menge der erfindungswesentlichen Komponente b2) liegt bei 1 bis 80 Gew.-% vorzugsweise bei 3 bis 60 Gew.-% und insbesondere bei 5 bis 35 Gew.-%.

Die Menge der gegebenenfalls mitverwendeten Komponente b3) kann in weiten Bereichen variieren und liegt bei 0 bis 98 Gew.-%, vorzugsweise bei bis zu 75 Gew.-% und insbesondere bei bis zu 60 Gew.-%.

Die angegebenen Mengen beziehen sich jeweils auf den Festkörpergehalt und beziehen sich auf die Gesamtmenge der sich aus den Komponenten b1) bis b3) zusammensetzenden Komponente b).

Die Herstellung der erfindungsgemäß einzusetzenden Bindemittel geschieht durch Abmischung der Einzelkomponenten, wobei im Falle der Mitverwendung von Komponenten b3), diese in beliebiger Weise mit den Komponenten b1) und b2) vorab vermischt werden können. Im übrigen erfolgt die Herstellung der Bindemittel lösungsmittelfrei oder in Anwesenheit der aus der Technologie der Polyurethanbeschichtungen üblichen Lösungsmittel.

Brauchbare Lösungsmittel sind beispielsweise Ethylacetat, Butylacetat, Methoxypropylacetat, Methylisobutylketon, Xylol, N-Methylpyrrolidon, Benzin, Chlorbenzole, ®Solvesso oder Gemische derartiger Lösungsmittel.

Im allgemeinen beträgt in den beim erfindungsgemäßen Verfahren einzusetzenden Beschichtungsmitteln das Gewichtsverhältnis der Gesamtmenge der Bindemittelkomponenten a) und b) zu Lösungsmittel 40:60 bis 100:0, vorzugsweise 60:40 bis 90:10.

In den beim erfindungsgemäßen Verfahren einzusetzenden Beschichtungsmitteln können auch andere, in der Beschichtungstechnologie übliche Hilfs- und Zusatzmittel enthalten sein. Hierzu gehören insbesondere Pigmente, Füllstoffe, Verlaufshilfsmittel, Katalysatoren, Antiabsetzmittel u.dgl.

Die Eigenschaften der beim erfindungsgemäßen Verfahren erhaltenen Überzüge können insbesondere durch geeignete Wahl von Art und Mengenverhältnissen der Ausgangskomponenten a), b1), b2) und b3) eingestellt werden.

Zur Durchführung des erfindungsgemäßen Verfahrens werden die erfindungsgemäß zu verwendenden Beschichtungsmittel nach an sich bekannten Methoden, beispielsweise durch Spritzen, Streichen, Tauchen, Fluten oder mit Hilfe von Walzen oder Rakeln auf beliebige Substrate ein- oder mehrschichtig aufgetragen. Das erfindungsgemäße Verfahren eignet sich zur Herstellung von Überzügen auf beliebigen Substraten, wie z.B. Metallen, Kunststoffen, Holz oder Glas. Besonders gut geeignet ist das erfindungsgemäße Verfahren zur Herstellung von Überzügen auf Stahlblechen, wie sie beispielsweise bei der Herstellung von Fahrzeugkarosserien, Maschinen, Verkleidungsblechen, Fässern oder Containern Verwendung finden. Die beim erfindungsgemäßen Verfahren zu beschichtenden Substrate können vor der Durchführung des erfindungsgemäßen Verfahrens mit geeigneten Grundierungen versehen sein.

Nach der Beschichtung der beispielhaft genannten Substrate werden bei der Durchführung des erfindungsgemäßen Verfahrens die aufgetragenen Überzüge bei Temperaturen von -20 bis etwa 100°C ausgehärtet. Vorzugsweise wird in einem Temperaturbereich von +10 bis +80°C, also unter den Bedingungen der Lufttrocknung oder der sogenannten forcierten Trocknung ausgehärtet. Es ist jedoch für die Praxis von großer Bedeutung, daß auch bei höheren Temperaturen, wie sie z.B. bei Betriebsstörungen auf Lackieranlagen auftreten können, kein thermischer Abbau der Beschichtungen erfolgt.

Der mit dem erfindungsgemäßen Verfahren erreichbare Oberflächenschutz wird in den nachfolgenden Beispielen demonstriert. Alle Prozentangaben beziehen sich auf Gewichtsprozente.

### Beispiele

In den nachfolgenden Beispielen werden folgende Ausgangsmaterialien eingesetzt.

### Polyisocyanate a)

### Polyisocyanat I

Handelsübliches, Isocyanuratgruppen aufweisendes Lackpolyisocyanat, erhalten durch Trimerisierung von Hexamethylendiisocyanat. NCO-Gehalt: 22,5 %, Viskosität: ca. 1.000 mPa.s (23°C).

### Polyisocyanat II

Handelsübliches, Uretdiongruppen aufweisendes Lackpolyisocyanat, erhalten durch Dimerisierung von Hexamethylendiisocyanat. NCO-Gehalt: 22,5 % Viskosität: ca. 200 mPa.s (23°C).

### Polyisocyanat III

Handelsübliches, Isocyanuratgruppen aufweisende Lackpolyisocyanat, erhalten durch Trimerisierung von Hexamethylendiisocyanat, 90 %ige Lösung in Butylaceat/Solventnaphtha 100 (1:1), NCO-Gehalt der Lösung: 19,4 %, Viskosität der Lösung: ca. 700 mPa.s (23°C).

### Polyisocyanat IV

Handelsübliches Biuretpolyisocyanat auf Basis von Hexamethylendiisocyanat, 75 %ige Lösung in Methoxypropylacetat/Xylol (1.1). NCO-Gehalt der Lösung: 16,5 %, Viskosität der Lösung: ca. 225 mPa.s (23°C).

### Polyasparaginsäureester b1)

### Polyasparaginsäureester I

Handelsüblicher Polyasparaginsäureester, erhalten durch Addition von 1 Mol 3,3'-Dimethyl-4,4'-diaminodicyclohexylmethan an 2 Mol Maleinsäurediethyslester, 90 %ige Lösung in Butylacetat. Äquivalentgewicht der Lösung: ca. 325 g/NH, Viskosität der Lösung: ca. 130 mPa.s (23°C).

### Polyasparaginsäureester II

Polyasparaginsäureester aus 1 Mol 4,4'-Diaminodicyclohexylmethan und 2 Mol Maleinsäureandiethylester (gemäß EP-A 0 403 921). Äquivalentgewicht: ca. 280 g/NH, Viskosität: ca. 1.500 mPa.s (23°C).

### Polyasparaginsäureester III

Polyasparaginsäureester, erhalten durch Addition von 1 Mol eines Gemisches aus Hexahydro-2,4- und 2,6-Diaminotoluol (Gew.-Verh. 65:35) an 2 Mol Maleinsäurediethylester (analog I und II). Äquivalentgewicht: ca. 265 g/NH, Viskosität: ca. 300 mPa.s (23°C).

### Polyasparaginsäureester IV

Polyasparaginsäureester aus 1 Mol 1-Amino-3,3,5-trimethyl-5-aminomethylcyclohexan (IPDA) und 2 Mol Maleinsäurediethylester (gemäß EP-A 0 403 921). Äquivalentgewicht: ca. 263 g/NH, Viskosität: ca. 500 mPa.s (23°C).

### Oxazolidine b2)

### Oxazolidin I

Handelsübliches Bisoxazolidin, hergestellt durch Reaktion von 2 Mol N-(2-Hydroxyethyl)-isopropyloxazolidin (aus 1 Mol Diethanolamin und 1 Mol Isobutyraldehyd) mit 1 Mol Adipinsäuredimethylester.

### Oxazolidin II

N-(2-Hydroxyethyl)2-ethyl-2-methyloxazolidin, hergestellt aus 1 Mol Diethanolamin und 1 Mol Butanon.

### Oxazolidin III

Handelsübliches Bisoxazolidin, hergestellt durch Reaktion von 2 Mol N-(2-Hydroxyethyl)-isopropyloxazolidin mit 1 Mol Hexamethylendiisocyanat.

### Oxazolidin IV

Handelsübliches Bisoxazolidin, hergestellt durch Reaktion von 2 Mol N-(2-Hydroxyethyl)-2-[1-ethyl-pentyl]oxazolidin mit 1 Mol Hexamethylendiisocyanat.

### Polyolkomponente b3)

### Polyol I

70 %ige Lösung in Butylacetat eines Copolymerisats mit einem Hydroxylgruppengehalt des Feststoffs von 4,1 % aus:
34,00 % Hydroxylpropylmethacrylat¹⁾
20,00 % n-Butylacrylat
28,00 % Methylmethacrylat
13,00 % Styrol
1,00 % Acrylsäure
4,00 % ®Trigonox B²⁾

¹⁾ Isomerengemisch, erhalten durch Anlagerung von Propylenoxid an Methacrylsäure
²⁾ Handelsüblicher Initiator, Hersteller: Akzo Chemie

### Polyol II

70 %ige Lösung in Butylacetat eines Copolymerisats mit einem Hydroxylgruppengehalt des Feststoffs von 4,1 % aus:
34,00 % Hydroxypropylmethacrylat¹⁾
20,00 % n-Butylacrylat
28,00 % Methylmethacrylat
12,00 % Styrol
2,00 % Acrylsäure
4,00 % ®Trigonox B²⁾

¹⁾ Isomerengemisch, erhalten durch Anlagerung von Propylenoxid an Methacrylsäure
²⁾ Handelsüblicher Initiator, Hersteller: Akzo Chemie

### Polyoll III

70 %ige Lösung in Butylacetat eines Copolymerisats mit einem Hydroxylgruppengehalt des Feststoffs von 3,1 % aus:
43,55 % Styrol
26,61 % n-Butylacrylat
22,00 % Hydroxypropylmethacrylat¹⁾
1,92 % Methylmethacrylat
1,92 % Acrylsäure
4,00 % ®Trigonox B²⁾

### Polyol IV

70 %ige Lösung in Butylacetat eines Copolymerisats mit einem Hydroxylgruppengehalt des Feststoffs von 4,2 % aus:
38,64 % Styrol
32,40 % Hxdroxyethylmethacrylat
24,00 % Butylacetat
0,96 % Acrylsäure
4,00 % ®Trigonox B²⁾
Unter Verwendung der vorstehend genannten Ausgangsmaterialien wurden gebrauchsfertige Beschichtungsmittel hergestellt und mit einer Rakel auf Glasplatten in einer Trockenfilmstärke von ca. 45 µm aufgetragen. Einzelheiten bezüglich der Zusammensetzung der Beschichtungsmittel und bezüglich der mechanischen Eigenschaften der erhaltenen Beschichtungen können der nachstehenden Tabelle entnommen werden. Zahlenangaben bezüglich der Ausgangsmaterialien beziehen sich auf Gewichtsteile.

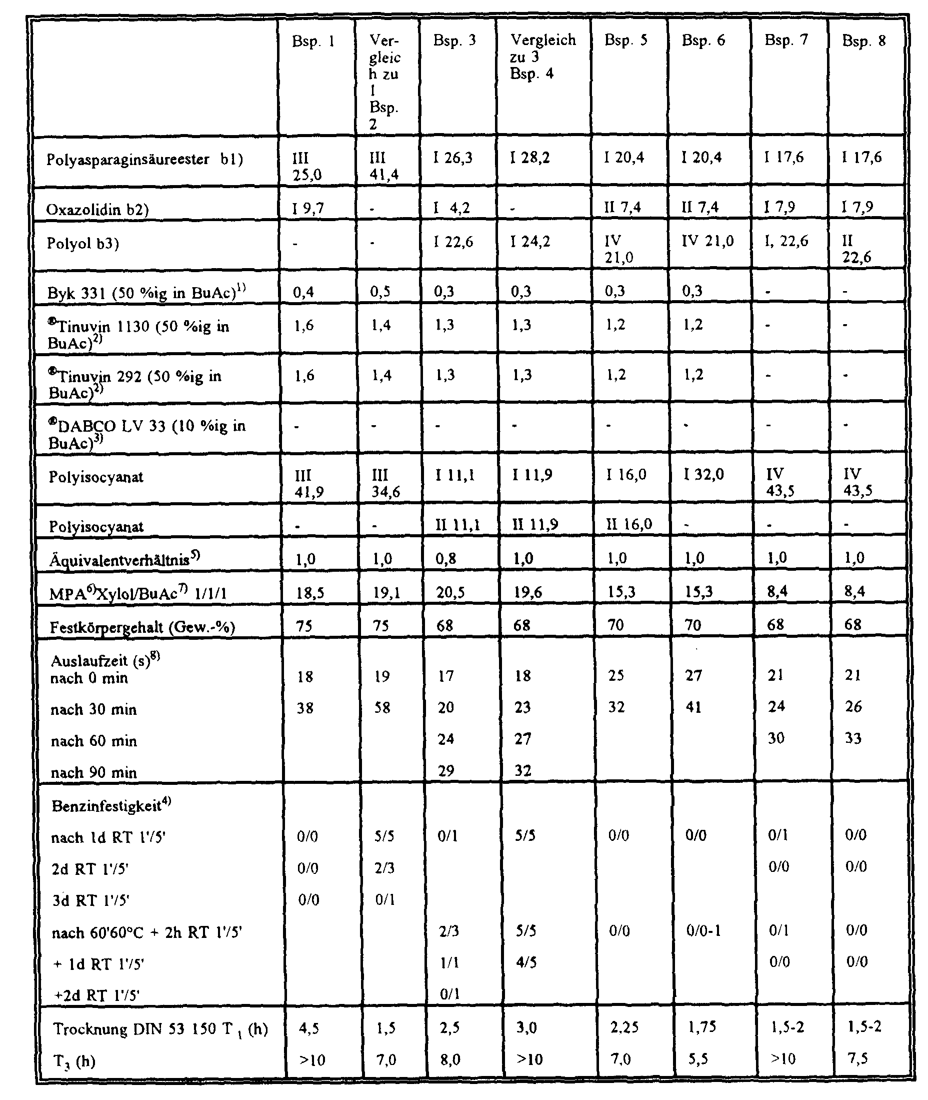

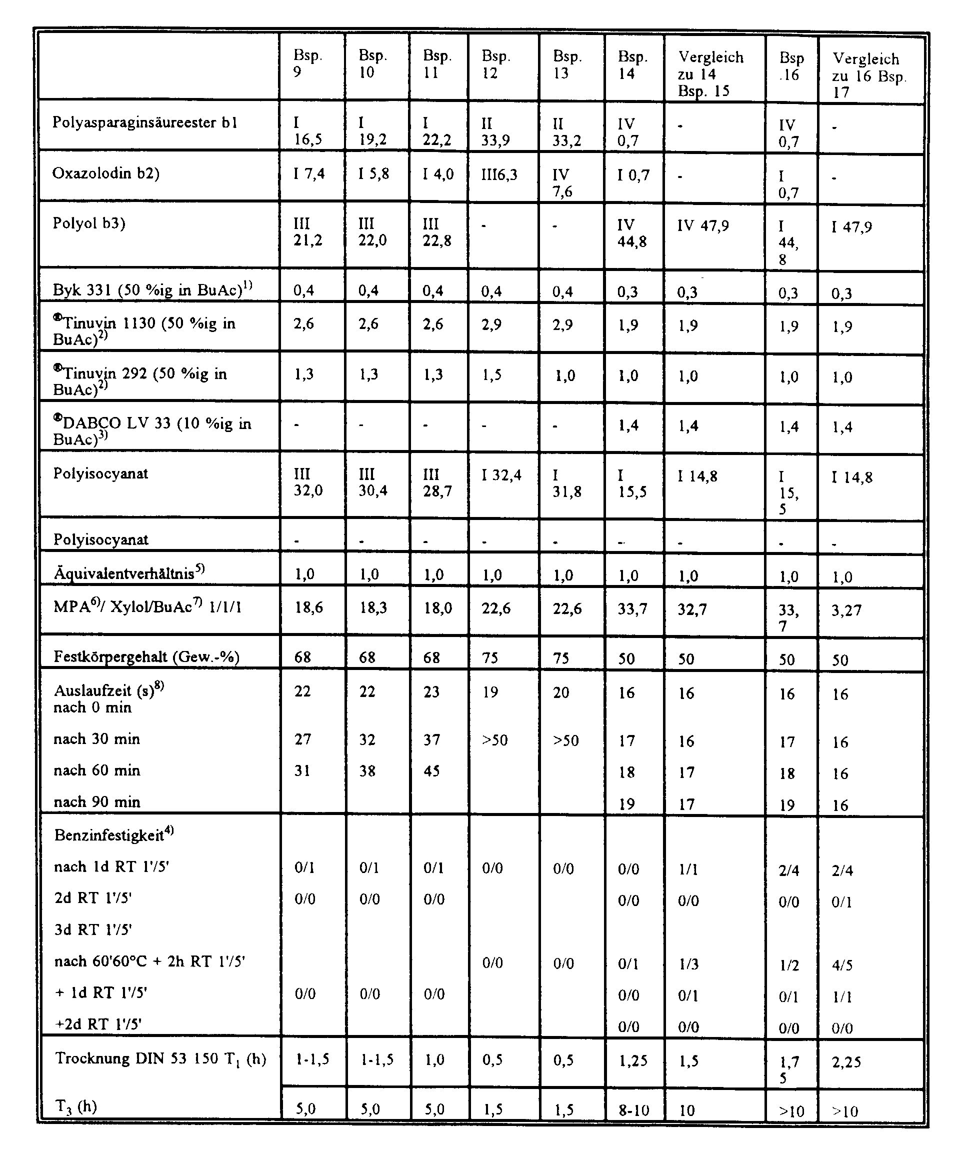

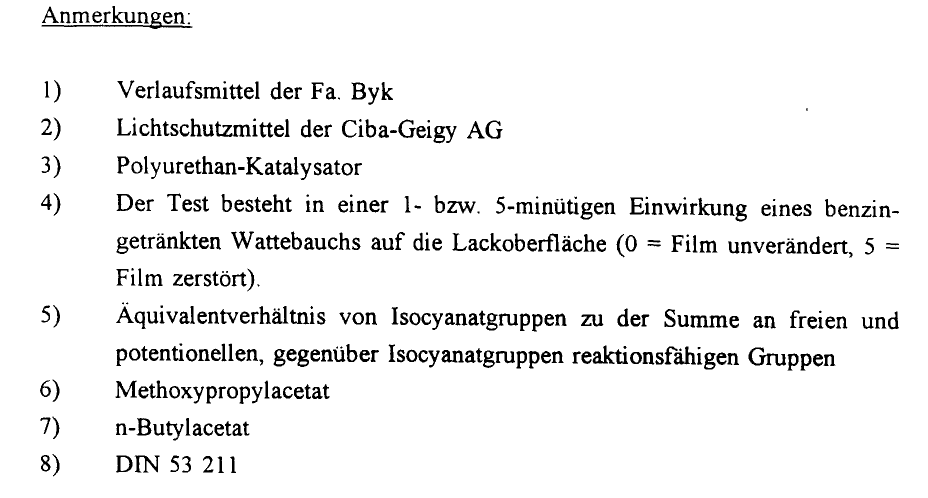

## Patentansprüche

1. Verfahren zur Herstellung von Überzügen durch Beschichtung beliebiger Substrate mit einem Beschichtungsmittel, welches als Bindemittel ein Zweikomponenten-System aus
a) einer Polyisocyanatkomponente, wobei aromatische Polyisocyanate ausgenommen sind und
b) einer gegenüber Polyisocyanaten reaktionsfähigen Reaktivkomponente, sowie gegebenenfalls die aus der Beschichtungstechnologie bekannten Hilfs- und Zusatzmittel enthält, dadurch gekennzeichnet, daß die Bindemittelkomponente b) aus Gemischen aus
b1) Verbindungen der allgemeinen Formel (I) 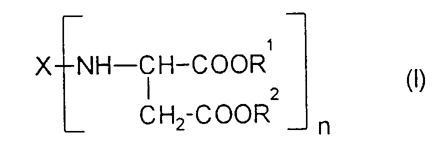
b2) Verbindungen des Molekulargewichtsbereichs Mn von 73 bis 10.000, die pro Molekül mindetens eine Struktureinheit der Formel (II) 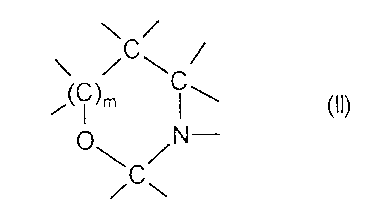 und gegebenenfalls
b3) anderen aus der Polyurethanchemie an sich bekannten, gegenüber Isocyanatgruppen reaktionsfähige Gruppen aufweisenden Verbindungen besteht,
wobei in diesen Formeln
X für einen n-wertigen, gegenüber Isocyanatgruppen inerten Rest steht, wie er durch Entfernung der primären Aminogruppen aus einem entsprechenden (cyclo)aliphatisch gebundene Aminogruppen aufweisenden Polyamin des Molekulargewichtsbereichs 60 bis 6.000 erhalten wird,
R¹ und R² für gleiche oder verschiedene Alkylreste mit 1 bis 18 Kohlenstoffatomen stehen,
n für eine ganze Zahl von mindestens 2 steht, und
m für 0 oder 1 steht.
wobei Aldimine und Ketimine ausgenommen sind.

2. Verfahren gemäß Anspruch 1, dadurch gekennzeichnet, daß man als Komponente b1) Verbindungen der allgemeinen Formel (I) verwendet, für welche R¹und R² für eine Methyl-, Ethyl-, n-Butyl- oder 2-Ethylhexylgruppe stehen.

3. Verfahren gemäß Anspruch 1 und 2, dadurch gekennzeichnet, daß man als Komponente b1) Verbindungen der allgemeinen Formel (I) verwendet, für welche X für den Rest steht, wie er druch Entfernung der Aminogruppen aus 1-Amino-3,3,5-trimethyl-5-aminomethyl-cyclohexan, 4,4' 4,4'-Diaminodicyclohexylmethan, 3,3'-Dimethyl-4,4'-diamino-dicyclohexylmethan, Hexahydro-2,4- und/oder 2,6-diaminotoluol, den isomeren C-Monomethyl-diaminodicyclohexylmethanen oder aus 3(4)-Aminomethyl-1-methyl-cyclohexylamin erhalten wird.

4. Verfahren gemäß Anspruch 1 bis 3, dadurch gekennzeichnet, daß man als Komponente b2) Verbindungen des Molekulargewichtsbereichs Mn des Molekulargewichts 73 bis 3.000 verwendet, die pro Molekül 1 bis 3 Struktureinheiten der Formel (III) 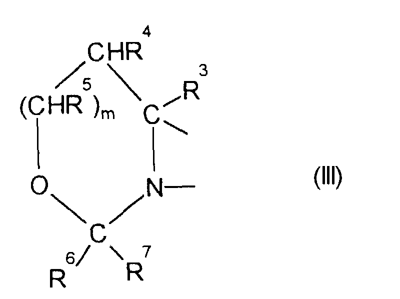 aufweisen, wobei
R³ für Wasserstoff oder einen Alkylrest mit 1 bis 6 Kohlenstoffatomen steht,
R⁴ und R⁵ für gleiche oder verschiedene Reste stehen und Wasserstoff oder Alkylreste mit 1 bis 3 Kohlenstoffatomen bedeuten,
R⁶ und R⁷ für gleiche oder verschiedene Reste stehen und für Wasserstoff oder inerte organische Reste stehen, wobei die Reste R⁶ und R⁷ auch zusammen mit den Kohlenstoffatomen des heterocyclischen Rings zu einem 5- oder 6-gliedrigen cycloaliphatischen Ring verknüpft sein können, mit der Maßgabe, daß höchstens einer der Reste R⁶ und R⁷ für Wasserstoff steht, und
m für 0 oder 1 steht.

5. Verfahren gemäß Anspruch 1 bis 4, dadurch gekennzeichnet, daß man als Komponente b2) Verbindungen des Molekulargewichtsbereichs 73 bis 1.500 verwendet, welche pro Molekül 1 bis 3 Struktureinheiten der Formel (IV) 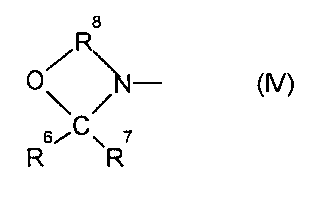 aufweisen, wobei
R⁶ und R⁷ die in Anspruch 5 genannte Bedeutung haben und
R⁸ für einen Alkylenrest mit 2 bis 6 Kohlenstoffatomen steht, mit der Maßgabe, daß zwischen dem Sauerstoff- und dem Stickstoffatom 2 oder 3 Kohlenstoffatomen angeordnet sind.

6. Verfahren gemäß Anspruch 1 bis 5, dadurch gekennzeichnet, daß man als Komponente b3) Copolymerisate des Molekülgewichtsbereichs Mn 800 bis 50.000 und einem Hydroxylgruppengehalt von 0,1 bis 12 Gew.-% von Hydroxylalkylestern der Acrylsäure und/oder Methacrylsäure mit anderen olefinisch ungesättigten Monomeren verwendet.

7. Verfahren gemäß Anspruch 1 bis 6, dadurch gekennzeichnet, daß die Menge der Komponente b1) bei 1 bis 99 Gew.-%, die Menge der Komponente b2) bei 1 bis 80 Gew.-% und die Menge der Komponente b3) bei 0 bis 98 Gew.-%, jeweils bezogen auf das Gesamtgewicht der Komponente b), liegt.

8. Verfahren gemäß Anspruch 1 bis 7, dadurch gekennzeichnet, daß man die Mengenverhältnisse der Komponenten a) und b) so bemißt, daß das Äquivalentverhältnis von Isocyanatgruppen der Komponente a) zur Summe aus gegenüber Isocyanatgruppen reaktionsfähigen und potentiell reaktionsfähigen Gruppen der Komponente b) bei 0,8:1 bis 2:1 liegt.

## Claims

1. Process for the production of surface coatings by coating any desired substrates with a coating agent that contains as binding agent a two-component system consisting of
a) a polyisocyanate component with the exception of aromatic polyisocyanates, and
b) a reactive component reactive towards polyisocyanates, and optionally the auxiliaries and additives known from coating technology, characterised in that the binding agent b) comprises mixtures of
b1) compounds of the general formula (I) 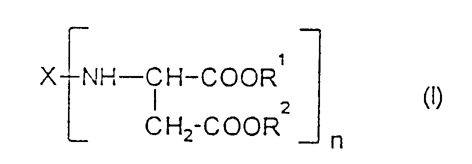
b2) compounds of the molecular weight range Mn of from 73 to 10,000 that contain per molecule at least one structural unit of formula (II) 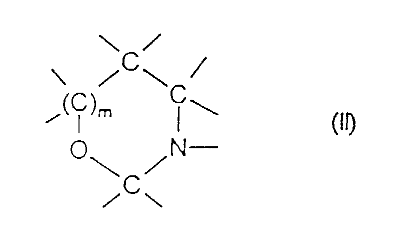 and optionally
b3) other compounds known per se from polyurethane chemistry containing groups reactive towards isocyanate groups, with the exception of aldimines and ketimines,
in which formulae
X represents an n-valent radical inert towards isocyanate groups, such as is obtained by removing the primary amino groups from a corresponding polyamine having (cyclo)-aliphatically bonded amino groups and a molecular weight range of from 60 to 6,000,
R¹ and R² represent the same or different alkyl radicals having from 1 to 18 carbon atoms,
n is an integer of at least 2, and
m is 0 or 1.

2. Process according to claim 1, characterised in that there are used as component b1) compounds of the general formula (I) wherein R¹ and R² represent a methyl, ethyl, n-butyl or 2-ethylhexyl group.

3. Process according to claim 1 and 2, characterised in that there are used as component b1) compounds of the general formula (I) wherein X represents the radical such as is obtained by removing the amino groups from 1-amino-3,3,5-trimethyl-5-aminomethylcyclohexane, 4,4'-diaminodicyclohexylmethane, 3,3'-dimethyl-4,4'diaminodicyclohexylmethane, hexahydro-2,4- and/or -2,6-diaminotoluene, the isomers of C-monomethyldiaminodicyclohexylmethane or from 3(4)-aminomethyl-1-methylcyclohexylamine.

4. Process according to claims 1 to 3, characterised in that there are used as component b2) compounds having a molecular weight range Mn of from 73 to 3,000 that contain per molecule from 1 to 3 structural units of formula (III) 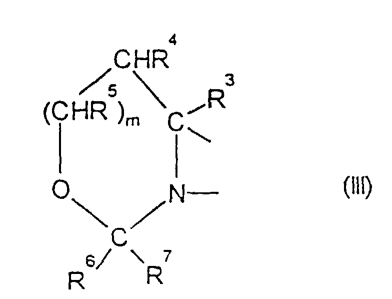 wherein
R³ represents hydrogen or an alkyl radical having from 1 to 6 carbon atoms,
R⁴ and R⁵ represent the same or different radicals and are hydrogen or alkyl radicals having from 1 to 3 carbon atoms,
R⁶ and R⁷ represent the same or different radicals and are hydrogen or inert organic radicals, it also being possible for the radicals R⁶ and R⁷, together with the carbon atoms of the heterocyclic ring, to be linked to form a 5- or 6-membered cycloaliphatic ring, with the proviso that a maximum of one of the radicals R⁶ and R⁷ represents hydrogen, and
m represents 0 or 1.

5. Process according to claims 1 to 4, characterised in that there are used as component b2) compounds having a molecular weight range of from 73 to 1,500 that contain per molecule from 1 to 3 structural units of formula (IV) 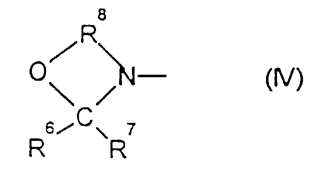 wherein
R⁶ and R⁷ are as defined in claim 4, and
R⁸ represents an alkylene radical having from 2 to 6 carbon atoms, with the proviso that 2 or 3 carbon atoms are arranged between the oxygen atom and the nitrogen atom.

6. Process according to claims 1 to 5, characterised in that there are used as component b3) copolymers having a molecular weight range Mn of from 800 to 50,000 and a hydroxyl group content of from 0.1 to 12 wt.% of hydroxyalkyl esters of acrylic acid and/or methacrylic acid with other olefinically unsaturated monomers.

7. Process according to claims 1 to 6, characterised in that the amount of component b1) is from 1 to 99 wt.%, the amount of component b2) is from 1 to 80 wt.% and the amount of component b3) is from 0 to 98 wt.%, in each case based on the total weight of component b).

8. Process according to claims 1 to 7, characterised in that the ratios of components a) and b) are such that the equivalent ratio of isocyanate groups of component a) to the sum of groups of component b) reactive and potentially reactive towards isocyanate groups is from 0.8:1 to 2:1.

## Revendications

1. Procédé de production de revêtements par application sur des substrats quelconques d'une composition de revêtement qui contient comme liant un système à deux constituants composé
a) d'un constituant polyisocyanate, à l'exception des polyisocyanates aromatiques, et
b) d'un constituant réactif capable de réagir avec les groupes isocyanate, et éventuellement d'agents auxiliaires et d'additifs connus dans la technologie des revêtements, caractérisé en ce que le constituant b) du liant est composé
b1) de composés de formule générale (I) 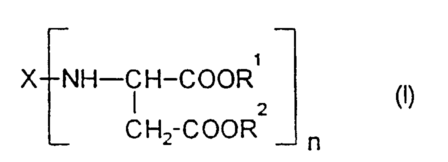
b2) de composés ayant une masse molaire Mn comprise entre 73 et 10 000, qui contiennent par molécule au moins une unité constitutive de formule (II) 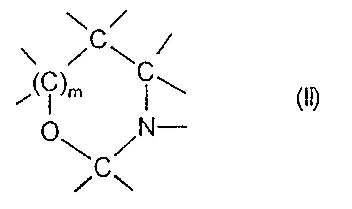 et éventuellement
b3) d'autres composés contenant des groupes capables de réagir avec les groupes isocyanate, connus en soi dans la chimie des polyuréthanes,
où, dans ces formules,
X représente un reste de valence n, inerte vis-à-vis des groupes isocyanate, obtenu par élimination des groupes amino primaire d'une polyamine correspondante contenant des groupes amino à liaison (cycle)aliphatique. et ayant une masse molaire comprise entre 60 et 6000,
R¹ et R² représentent des restes alkyle identiques ou différents de 1 à 18 atomes de carbone,
n représente un nombre entier égal ou supérieur à 2, et
m est 0 ou 1,
à l'exception des aldimines et des cétimines.

2. Procédé selon la revendication 1, caractérisé en ce que l'on utilise comme constituant b1) des composés de formule générale (I) dans laquelle R¹ et R² représentent un groupe méthyle, éthyle, n-butyle ou 2-éthylhexyle.

3. Procédé selon les revendications 1 et 2, caractérisé en ce que l'on utilise comme constituant b1) des composés de formule générale (I) dans laquelle X représente le reste obtenu par élimination des groupes amino du 1-amino-3,3,5-triméthyl-5-aminométhylcyclohexane, du 4,4'-diaminodicyclohexylméthane, du 3,3'-diméthyl-4,4'-diaminodicyclohexylméthane, de l'hexahydro-2,4- et/ou 2,6-diaminotoluène, des diaminodicyclohexylméthanes C-monométhylés isomères ou de la 3(4)-aminométhyl-1-méthylcyclohexylamine.

4. Procédé selon les revendications 1 à 3, caractérisé en ce que l'on utilise comme constituant b2) des composés dont la masse molaire Mn est comprise entre 73 et 3 000, qui contiennent par molécule 1 à 3 unités constitutives de formule (III) 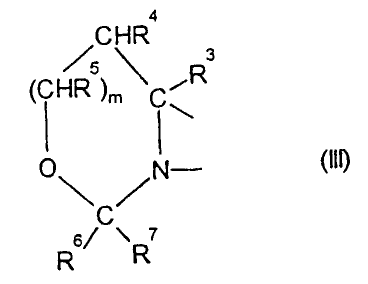 dans laquelle
R³ représente un atome d'hydrogène ou un reste alkyle de 1 à 6 atomes de carbone,
R⁴ et R⁵ sont des restes identiques ou différents et représentent des atomes d'hydrogène ou des restes alkyle de 1 à 3 atomes de carbone,
R⁶ et R⁷ sont des restes identiques ou différents et représentent des atomes d'hydrogène ou des restes organiques inertes, les restes R⁶ et R⁷ pouvant aussi être reliés ensemble avec l'atome de carbone du noyau hétérocyclique pour former un noyau cycloaliphatique de 5 ou 6 chaînons, à condition qu'au plus l'un des restes R⁶ et R⁷ représente un atome d'hydrogène, et
m est égal à 0 ou 1.

5. Procédé selon les revendications 1 à 4, caractérisé en ce que l'on utilise comme constituant b2) des composés dont la masse molaire est comprise entre 73 et 1 500, qui contiennent par molécule 1 à 3 unités constitutives de formule (IV) 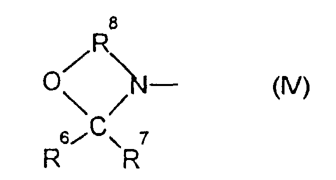 dans laquelle R⁶ et R⁷ ont la signification indiquée dans la revendication 5, et R⁸ est un reste alkylène de 2 à 6 atomes de carbone, à condition qu'il y ait 2 ou 3 atomes de carbone entre l'atome d'oxygène et l'atome d'azote.

6. Procédé selon les revendications 1 à 5, caractérisé en ce que l'on utilise comme constituant b3) des copolymères, ayant une masse molaire Mn comprise entre 800 et 50 000 et une teneur en groupes hydroxyle de 0,1 à 12 % en masse, d'esters hydroxyalkyliques de l'acide acrylique et/ou de l'acide méthacrylique avec d'autres monomères à insaturation oléfinique.

7. Procédé selon les revendications 1 à 6, caractérisé en ce que la quantité de constituant b1) est de 1 à 99 % en masse, la quantité de constituant b2) est de 1 à 80 % en masse et la quantité de constituant b3) est de 0 à 98 % en masse, à chaque fois par rapport à la masse totale du constituant b).

8. Procédé selon les revendications 1 à 7, caractérisé en ce que l'on détermine les proportions des constituants a) et b) de manière que le rapport en équivalents des groupes isocyanate du constituant a) à la somme des groupes du constituant b) réactifs et potentiellement réactifs avec les groupes isocyanate soit compris entre 0,8:1 et 2:1.
